# EUROPÄISCHE PATENTSCHRIFT

(11) **EP 3 783 276 B1**
(45) Veröffentlichungstag und Bekanntmachung des Hinweises auf die Patenterteilung: **12.04.2023**
(21) Anmeldenummer: 20190418.2
(22) Anmeldetag: 11.08.2020
(51) Int. Cl.: F24T 10/20, F01K 25/10, F03G 7/04, F24T 10/30

(54) **SYSTEM UND VERFAHREN ZUR GEOTHERMISCHEN ENERGIEGEWINNUNG**
GEOTHERMAL ENERGY RECOVERY SYSTEM AND METHOD
SYSTÈME ET PROCÉDÉ DE PRODUCTION D'ÉNERGIE GÉOTHERMIQUE

(30) Priorität: 22.08.2019 DE 102019122588
(43) Veröffentlichungstag der Anmeldung: 24.02.2021
(73) Patentinhaber: Helmholtz-Zentrum Potsdam - Deutsches GeoForschungsZentrum GFZ Stiftung des Öffentlichen Rechts des Landes Brandenburg, 14473 Potsdam (DE)
(72) Erfinder: Zimmer, Martin, 14548 Schwielowsee (DE); Strauch, Bettina, 14558 Nuthetal (DE)
(74) Vertreter: Hertin und Partner Rechts- und Patentanwälte PartG mbB

(56) Entgegenhaltungen:
- DE-A1- 10 234 568
- DE-A1-102008 057 943
- FR-A1- 2 881 482
- FR-A1- 3 009 613
- US-A- 4 297 847
- US-A1- 2011 100 002
- US-A1- 2012 174 581
- US-A1- 2013 283 791

## Beschreibung

Die vorliegende Erfindung betrifft ein System zur Gewinnung geothermischer Energie, umfassend a.) ein druckdichtes Kühlungsreservoir und einen tiefer gelegenen druckdichten Gesteinshohlraum als Wärmereservoir, wobei im Wärmereservoir gegenüber dem Kühlungsreservoir eine erhöhte Temperatur und optional ein erhöhter Druck vorliegt, b.) eine Injektionsleitung, über die ein im Kühlungsreservoir vorliegendes flüssiges Energietauschermedium dem Wärmereservoir zugeführt werden kann, c.) eine Steigleitung, über die das in seinen flüssigen oder überkritischen Aggregatzustand übergegangene Energietauschermedium aus dem Wärmereservoir in das Kühlungsreservoir zurückgeführt werden kann, wobei die Steigleitung eine Vorrichtung zur Energieumwandlung umfasst. Zudem wird ein Verfahren zur Gewinnung geothermischer Energie beansprucht.

### Stand der Technik

Die Technologie zur Nutzung von Erdwärme wurde in den letzten Jahren weltweit intensiv entwickelt. Dabei sind sowohl neue Konzepte für die einzelnen Komponenten der Verfahren erprobt als auch bisher schwer zugängliche und neue geologische Wärmereservoire erschlossen worden. Neue Stimulierungsverfahren geothermischer Reservoire, Prozesssteuerung auf der Grundlage neuer Modellierungsverfahren, CO₂ und überkritischem CO₂ als Wärmetauschermedium (Energietauschermedium) und neuartige *closed-loop* Verfahren sind relevante Entwicklungslinien in diesem Bereich.

Technische Systeme zur Gewinnung geothermischer Energie lassen sich generell anhand ihrer Systembestandteile unterscheiden. Relevant sind unter anderem (i) die Art, Teufe (bergmännische Bezeichnung für Tiefe) und geologische Einbettung des Reservoirs, aus dem Wärme gefördert wird; (ii) die erforderlichen technischen Maßnahmen zur Erschließung der Wärmequelle (Erbohren, evtl. Stimulierung des Reservoirs u. ä.); (iii) die Art des verwendeten Wärmetauschermediums (z.B. Wasser, CO₂, überkritisches CO₂); (iv) die Gestaltung des Systems als offener Kreislauf (direkte Wechselwirkung (Durchströmung) des Mediums mit der geologischen Umgebung) oder geschlossener Kreislauf (Wärmeübertragung mit technischer Begrenzung (Rohrleitungswand) ohne direkte Berührung des Wärmetauschermediums mit dem geologischem Umfeld des Wärmetauschermediums); (v) die Temperatur- und Druckbereiche des Wärmetauschermediums im Kreislauf (in Abhängigkeit von den geologischen und den technischen Rahmenbedingungen); sowie (vi) die Art des verwendeten Systems zur Energiewandlung.

Aus dem Stand der Technik sind insbesondere Verfahren und Systeme bekannt, in denen unterirdische Hohlräume zum Erhitzen eines zugeführten Energietauschermediums genutzt werden, das in der Folge an die Oberfläche zurückgeführt wird, wo es für die Energiegewinnung genutzt wird. Hierfür werden insbesondere Porenspeicher, die einen "Caprock" als Sperrschicht umfassen, um das vertikale Aufsteigen des Energietauschermediums zu verhindern, genutzt (s. beispielsweise US8316955B2). Ein weiteres System zur Gewinnung geothermischer Energie ist aus der US 4,297,847 bekannt.

Die hierbei genutzten Gesteinsformationen sind sogenannte "offene" Gesteinsräume, die direkt mit dem Energietauschermedium interagieren, wobei ein gasdichter bzw. druckdichter Abschluss des Gesteinshohlraums nicht gewährleistet ist. Solche offenen Systeme sind daher mit dem Nachteil verbunden, dass Teile des eingesetzten Energietauschermediums verloren gehen und zur Gewährleistung eines kontinuierlichen Betriebes permanent große Mengen des Mediums zur Verfügung gestellt werden müssen.

Die sinnvolle wirtschaftliche Folgenutzung von industriell genutzten unterirdischen Gesteinshohlräumen, wie beispielsweise stillgelegten Gasspeichern, Bergbaustollen oder gesolten Hohlräumen und insbesondere stillgelegten Salzminen, stellt ein ungelöstes Problem dar. Die Möglichkeiten der geothermischen Nutzung von nicht mehr genutzten untertägigen Hohlräumen in Salzstrukturen sind bisher wenig untersucht.

Es besteht somit im Stand der Technik ein Bedarf an Systemen und Verfahren zur Gewinnung geothermischer Energie, die eine Nutzung von unterirdischen Gesteinshohlräumen zur Energiegewinnung ermöglichen, ohne dass das hierbei genutzte Energietauschermedium in großen Mengen aus dem System verloren geht, wie dies bei offenen Systemen des Standes der Technik der Fall ist.

### Allgemeine Beschreibung der Erfindung

Die der vorliegenden Erfindung zugrundeliegende technische Aufgabe besteht in der Bereitstellung eines Systems bzw. Verfahrens, das die Nutzung von unterirdischen Gesteinshohlräumen zur geothermischen Energiegewinnung ermöglicht, ohne dass hierbei große Mengen des verwendeten Energietauschermedium verloren gehen.

Die technische Aufgabe wird durch die hier dargestellte Erfindung mittels eines Systems und Verfahrens zur Gewinnung geothermischer Energie gelöst.

Die Erfindung betrifft ein System zur Gewinnung geothermischer Energie nach Anspruch 1.

Das erfindungsgemäße System ermöglicht die Gewinnung geothermischer Energie, über ein Energietauschermedium, welches Energie aus der Erdwärme aufnimmt und diese Energie über eine Vorrichtung zur Energieumwandlung abgibt, wobei beispielsweise elektrische Energie erzeugt wird. Innerhalb dieses Systems wird das Energietauschermedium in einem quasi geschlossenen Kreislauf zirkuliert. Das erfindungsgemäße System umfasst einen druckdichten Gesteinshohlraum, welcher als Wärmereservoir fungiert. Die Dichtigkeit ermöglicht es, dass das Energietauschermedium direkt mit dem umgebenden Gestein interagieren kann, ohne dass hierfür eine Auskleidung oder Verrohrung des Reservoirs notwendig wäre, um ein Entweichen des Energietauschermediums zu verhindern. Diese Konstruktion in einem sogenannten halboffenen System vereint die Vorteile optimaler Wärmeübertragung im offenen System und ist dabei, wie ein geschlossenes System, verlustarm hinsichtlich des Wärmetauschermediums (Energietauschermediums).

In Ausführungsformen der Erfindung ist im Wärmereservoir gegenüber dem Kühlungsreservoir die Temperatur erhöht. Zudem kann auch der Druck im Wärmereservoir gegenüber dem Kühlungsreservoir erhöht sein. Bevorzugt sind im Wärmereservoir sowohl Temperatur als auch Druck gegenüber dem Kühlungsreservoir erhöht.

Bei dem erfindungsgemäßen System handelt es sich weder um einen tatsächlich offenen, noch um einen vollständig geschlossenen Kreislauf, da die Injektionsleitung und die Steigleitung bevorzugt ummantelt und wärmeisoliert sind, die verwendeten Reservoirs hingegen einen direkten Kontakt zwischen dem Gestein und dem Energietauschermedium ermöglichen. Das Energietauschermedium soll erfindungsgemäß in druckdicht abgeschlossene Salzgesteinshohlräumen (z.B. in Salzkavernen bzw. Salzkammern im stillgelegten Salzbergbau) eingeleitet werden. Der Wärmeaustausch, also die Erwärmung des Mediums im Wärmereservoir und das Abkühlen des Mediums im Kühlungsreservoir, erfolgt über die Grenzen bzw. Wände bzw. Gesteinsoberflächen der Hohlräume. Das Energietauschermedium wird dann dem System der Energiewandlung, also der Vorrichtung zur Energieumwandlung, zugeleitet.

Im erfindungsgemäßen System liegt das Energietauschermedium in flüssiger Form in einem Kühlungsreservoir vor. Dies ist möglich, da das System so ausgerichtet ist, dass in dem Kühlungsreservoir entsprechende Temperaturen und Druckbedingungen herrschen, die für den flüssigen Zustand des Energietauschermediums notwendig sind. Da es sich bei der Erfindung um die Nutzung druckdichter Gesteinshohlräume handelt, ist es möglich, bei der Befüllung des Kühlungsreservoirs mit dem Energietauschermedium einen geeigneten Druck einzustellen, beispielsweise mithilfe eines Pumpsystems.

An einem tief gelegenen Punkt des Kühlungsreservoirs, vorzugsweise an dessen tiefstem Punkt, ist eine Injektionsleitung angeschlossen. Hierdurch ist es möglich, das im Kühlungsreservoir vorhandene flüssige Energietauschermedium mit Hilfe der Gravitationskraft aus dem Kühlungsreservoir nach unten abfließen zu lassen. Die Injektionsleitung ist an ihrem unteren Ende mit dem tiefer gelegenen unterirdischen Wärmereservoir verbunden. Somit ermöglicht die Injektionsleitung, dass das Energietauschermedium mittels Gravitationskraft aus dem Kühlungsreservoir nach unten in das Wärmereservoir abfließen kann. Hierbei bildet sich innerhalb der Injektionsleitung eine Flüssigkeitssäule, wodurch aufgrund des hydrostatischen Druckes der Säule mit zunehmender Tiefe ein höherer Druck innerhalb des Energietauschermediums erzeugt wird. Dieser erhöhte Druck liegt somit auch in dem Wärmereservoir vor, in das das Energietauschermedium über die Injektionsleitung einfließen kann. Bevorzugt kommt es innerhalb der Injektionsleitung zu keiner relevanten Temperaturerhöhung des Energietauschermediums, da die Injektionsleitung wärmeisoliert ist gegenüber den umgebenden Gesteinsformationen und somit keine relevanten Mengen an geothermischer Energie aufnehmen kann, bevor es die Injektionsleitung verlässt.

Mit Eintritt in das unisolierte Wärmereservoir, kann das Energietauschermedium über direkten Kontakt mit den Gesteinsoberflächen des Wärmereservoirs die Wärmeenergie der Umgebung aufnehmen. Dies führt, ggf. zusammen mit einer Druckerhöhung, die durch die tiefere Lage des Wärmereservoirs erzeugt wird, dazu, dass das flüssige Energietauschermedium innerhalb des Wärmereservoirs einen Phasenübergang von flüssig zu gasförmig oder überkritisch durchmacht. Aufgrund des Phasenübergangs nimmt die Dichte des Energietauschermediums deutlich ab und es kommt zu einer Ausdehnung des Mediums innerhalb des Wärmereservoirs.

Das erfindungsgemäße System kann somit ein Wärmereservoir umfassen, dessen Temperatur gegenüber dem Kühlungsreservoir insoweit erhöht ist, dass durch die Erwärmung des Energietauschermediums, das im Kühlungsreservoir und der Injektionsleitung flüssig vorliegt, im Wärmereservoir ein Phasenübergang des Energietauschermediums stattfindet. Das Energietauschermedium geht somit im Wärmereservoir in den überkritischen oder gasförmigen Zustand über.

Das erwärmte Energietauschermedium wird nach dem Phasenübergang über eine mit dem Wärmereservoir verbundene Steigleitung abgeleitet, wobei die Verbindung zwischen Steigleitung und Wärmereservoir bevorzugt im oberen Bereich des Wärmereservoirs liegt, idealerweise am höchsten Punkt des Wärmereservoirs. Hierdurch wird ermöglicht, dass das Energietauschermedium innerhalb des Systems nach dem Phasenübergang aus dem Wärmereservoir abgeführt wird. In der Steigleitung ist das aus dem Wärmereservoir abgeführte Energietauschermedium bevorzugt gasförmig und/oder überkritisch.

Der Aufstieg des Energietauschermediums erfolgt bevorzugterweise aufgrund der erhöhten Temperatur und geringeren Dichte rein advektiv, ohne Zufuhr von externer Energie oder zusätzlicher Pumpleistung. Das erwärmte aufsteigende Energietauschermedium stellt hierbei einen konstanten Fluidstrom innerhalb der Steigleitung dar, dem mithilfe einer Vorrichtung zur Energieumwandlung die aufgenommene geothermische Energie entzogen werden kann. Insbesondere kann der Fluidstrom des aufsteigenden gasförmigen oder überkritischen Energietauschermediums durch eine Turbine geleitet werden, die hierdurch angetrieben wird und dem Energietauschermedium Energie zu deren Nutzbarmachung entzieht.

Bevorzugt umfasst die Vorrichtung zur Energieumwandlung eine Turbine, die im oberen Bereich der Steigleitung, nah am Übergang der Steigleitung in das Kühlungsreservoir, positioniert ist. Somit kann das Energietauschermedium nach Passage durch diese Vorrichtung bzw. durch die Turbine direkt in das Kühlungsreservoir austreten, wo aufgrund der niedrigeren Temperaturen und des ggf. geringeren bzw. eingestellten Drucks wiederum ein Phasenübergang in den flüssigen Bereich stattfindet.

Somit ermöglicht das System der vorliegenden Erfindung die Etablierung eines Kreislaufes des in dem System enthaltenen Energietauschermediums, wobei das Energietauschermedium geothermische Energie im Wärmereservoir aufnimmt, die dem Energietauschermedium mit Hilfe der Vorrichtung zur Energieumwandlung nach Aufstieg durch die Steigleitung wieder entzogen wird.

In der Turbine bzw. der Vorrichtung zur Energieumwandlung oder im nachfolgenden Kühlungsreservoir erfolgt der Phasenübergang des gasförmigen oder überkritischen Energietauschermediums zurück in den flüssigen Zustand, da hier eine Abkühlung des Energietauschermediums erfolgt. Nach dem Energieentzug durch die Vorrichtung/Turbine erfolgt die finale Abkühlung auf die Ausgangskonditionen im Kühlungsreservoir. Befindet sich das Kühlungsreservoir in einem untertägigen Gesteinshohlraum, ist dies aufgrund der Kühlleistung der umgebenden Gesteinsformationen ohne externen Energieeinsatz möglich.

Die Tatsache, dass das System halb offen ist, also einen direkten Wärmeaustausch zwischen den Gesteinsformationen der Reservoire und dem Energietauschermedium ermöglicht, aber gleichzeitig druckdicht ist, ist ein entscheidender Vorteil des Systems, da der Energieaustausch, der für die Phasenübergänge innerhalb des Systems notwendig ist, sehr effizient stattfinden kann, aber gleichzeitig sehr wenig Energietauschermedium verloren geht und das System somit fast autark funktionieren kann.

Das erfindungsgemäße System ist insgesamt druckdicht, so dass das Energietauschermedium auch bei erhöhtem Druck nicht bzw. nur in vernachlässigbaren Mengen aus dem System austreten kann. Insbesondere sind die Gesteinshöhlen des Systems, in denen bevorzugt ein direkter Kontakt zwischen dem Energietauschermedium und den Gesteinswänden stattfindet, druckdicht abgeschlossen. Selbiges gilt für die Verbindungen zwischen den Gesteinshohlräumen bzw. Reservoiren und den Leitungen des Systems (Injektionsleitung und Steigleitung).

Im Rahmen der Erfindung sind das Wärmereservoir und das Kühlungsreservoir jeweils ein druckdichter natürlicher oder künstlicher Salzgesteinshohlraum, bevorzugt ein stillgelegter Salzstollen. Hierbei können ganze Stollensysteme oder Teile dieser Systeme genutzt werden.

Ein entscheidender Vorteil des erfindungsgemäßen Systems bzw. Verfahrens ist die Möglichkeit einer Nachnutzung bereits vorhandener Gesteinshohlräume. Die geothermische Energiegewinnung stellt eine gewünschte Option zur ökonomisch sinnvollen und gesellschaftlich gewünschten Nachnutzung bereits vorhandener Gesteinshohlräume dar, wobei bestehende Hohlraumstrukturen und Infrastrukturen weitergenutzt werden können, anstatt diese neu zu schaffen.

Es ist bevorzugt, dass die Temperatur im Kühlungsreservoir und in der Injektionsleitung unterhalb der Temperatur am kritischen Punkt des Energietauschermediums ist. Hierdurch wird verhindert, dass innerhalb der Injektionsleitung schon vor Eintritt in das Wärmereservoir ein Phasenübergang in den überkritischen Bereich erfolgt. Dies lässt sich gut am Beispiel von CO₂ als Hauptbestandteil des Energietauschermediums erklären. Flüssiges CO₂, das eine Temperatur von weniger als 31 °C (Temperatur am kritischen Punkt) hat, kann durch eine Druckerhöhung ohne gleichzeitige Temperaturerhöhung nicht in überkritisches CO₂ überführt werden und bleibt flüssig.

Eine effiziente Wärmeübertragung vom Gestein auf das Energietauschermedium ist durch deren direkten Kontakt sowohl im Kühlungs- als auch im Wärmereservoir möglich. Interaktion zwischen dem Gestein der Reservoire und dem Energietauschermedium ist ein Vorteil der Erfindung, da hierdurch Zwischenschritte der Wärmeübertragung auf eine zwischenliegende Schicht vermieden werden und somit im Vergleich zu geschlossenen Systemen, in denen keine direkte Interaktion zwischen dem Umgebungsgestein und dem Energietauschermedium stattfindet, ein deutlich effizienterer Wärmeaustausch möglich ist. Die direkte Interaktion mit dem Gestein ist insbesondere in Fällen vorteilhaft, in denen das Reservoirgestein eine gute Wärmeleitfähigkeit aufweist.

Die Wärmeleitfähigkeit ist eine Stoffeigenschaft, die den Wärmestrom durch ein Material aufgrund der Wärmeleitung bestimmt. Aus der Wärmeleitfähigkeit lässt sich ablesen, wie gut ein Material Wärme leitet und wie gut sich ein Material zur Wärmeübertragung eignet. Je höher der Wert der Wärmeleitfähigkeit ist, desto besser ist die Wärmeübertragung auf in Kontakt stehende Stoffe oder Medien. Die Wärmeleitfähigkeit hat im Sl-System die Einheit Watt pro Meter und Kelvin. Das im Rahmen der Erfindung genutzte Salzgestein, von dem die Reservoire des erfindungsgemäßen Systems umgeben sein können, weist eine besonders gute Wärmeleitfähigkeit auf, die im Bereich von 5 W/m*K liegt. Dieser Wert liegt deutlich über den Werten für Sand und Tonsteine, weshalb Hohlräume in Salzgesteinen für die geothermische Energiegewinnung im Rahmen der Erfindung verwendet werden.

In Ausführungsformen des erfindungsgemäßen Systems kann die Oberfläche, Porosität und/oder Permeabilität des Gesteinshohlraums oder der Gesteinshohlräume eingestellt werden kann, beispielsweise durch das Einbringen von Abraumgestein, vorzugsweise Abraumsalzgestein.

Es ist ein großer Vorteil der vorliegenden Erfindung, dass bei Nutzung von Gesteinshohlräumen, insbesondere von Stollensystemen, wie beispielsweise stillgelegten Salzstollen, die Faktoren, die die Wärmeaustauschoberfläche zwischen dem Gestein und dem Energietauschermedium bestimmen, wie die Oberfläche, die Porosität, und die Permeabilität des Gesteins eingestellt werden können, um den Ablauf des erfindungsgemäßen Verfahrens besonders effizient zu gestalten. So kann beispielsweise die Oberfläche eines Hohlraums dadurch vergrößert werden, dass im Inneren des Hohlraums Abraumgestein oder Gesteinsgeröll aufgeschüttet wird. Dieses aufgeschüttete Gestein kann entweder in den Hohlraum eingebracht werden, oder durch Abtragen von den Wänden des Gesteinshohlraums generiert werden. Durch solches Abraumgestein oder Geröll innerhalb der Hohlräume wird die effektive Austauscherfläche zwischen Medium und Gestein in den Reservoiren deutlich erhöht, wodurch eine effizientere Wärmeübertragung möglich ist.

Beispielsweise kann im Rahmen eines erfindungsgemäßen Systems das Wärmereservoir *500 Meter (m), bevorzugt 1000 m tiefer* liegen als das Kühlungsreservoir. Andere Tiefen und Abmessungen sind möglich. Die konkreten Abmessungen und Bedingungen, wie auch insbesondere die einzustellenden Temperaturen und Drücke werden anhand der lokalen Vorgaben der genutzten Gesteinshohlräume festgelegt. Der Höhenunterschied zwischen Wärmereservoir und Kühlungsreservoir, sollte möglichst groß sein, um das System effizient zu machen. Das System kann im Rahmen der Erfindung aber auch nur einen sehr kleinen Höhenunterschied der Reservoire umfassen. Hierbei kann es vorteilhaft sein, wenn aufgrund der geothermischen Umgebung dennoch ein großer Temperaturunterschied zwischen den Reservoiren besteht. Wichtig ist, dass die Druck- und Temperaturbedingungen so sind, dass das Energietauschermedium im Kühlungsreservoir flüssig ist, und im Wärmereservoir gasförmig oder überkritisch ist.

Im Rahmen des erfindungsgemäßen Systems kann das Energietauschermedium ausgewählt sein aus der Gruppe umfassend CO₂, Ammoniak, FCKW, oder Gemische davon, bevorzugt, CO₂, und optional mit Additiven versetzt sein, wie beispielsweise Helium, Argon oder Krypton. Das Energietauschermedium kann CO₂, Ammoniak, FCKW, oder Gemische davon umfassen oder daraus bestehen. Zudem kann ein solches Energietauschermedium Additive wie beispielsweise Helium, Argon und/oder Krypton umfassen.

In Ausführungsformen der Erfindung kann das Energietauschermedium (in Abhängigkeit von Durchführung und Arbeitsumgebung des Systems) Mischungen von CO₂, O₂, He, Ar, Kr, Butan, Cyclohexan, Ammoniak, FCKWs und/oder SF₆ umfassen.

Als Energietauschermedium können auch Gasgemische eingesetzt werden, die auf die jeweils herrschenden geothermischen Bedingungen abgestimmt sind, so dass die Voraussetzung, dass das Energietauschermedium im Kühlungsreservoir flüssig ist und im Wärmereservoir in einen gasförmigen oder überkritischen Zustand übergehen, erfüllt ist. Der Fachmann weiß, wie er geeignete Gasgemische, die gegebenenfalls auch geeignete Additive umfassen, herstellen kann.

Das Wärmetransportsystem soll vorzugsweise mit CO₂ betrieben werden und deren Phasenübergänge nutzen. Durch den Einsatz von Additiven kann die Kreislaufeffizienz erhöht werden. Hierbei wird Wärmetransport und Übertrag optimiert und den geothermischen Gegebenheiten angepasst. Zur Erhöhung der thermodynamischen Performance sind, in Abhängigkeit von Durchführung und Arbeitsumgebung des Systems, Mischungen von CO₂ mit O₂, He, Ar, Kr, Butan, Cyclohexan, Ammoniak, FCKWs und/oder SF₆ möglich/denkbar.

In bevorzugten Ausführungsformen des Systems umfasst das Energietauschermedium CO₂. In anderen Ausführungsformen der Erfindung besteht das Energietauschermedium vornehmlich als CO₂, so dass CO₂ die Hauptkomponente des Energietauschermedium ist.

CO₂ ist als Teil des Energietauschermediums bevorzugt, da es bei moderaten Umgebungstemperaturen von weniger als 30 °C mit Hilfe von Druckerhöhung in den flüssigen Zustand überführt werden kann. Unter solchen Bedingungen kann bereits eine geringe Temperaturerhöhung im Wärmereservoir zu einem Phasenübergang führen, so dass bei Nutzung von CO₂ als (Haupt-)Komponente des Energietauschermediums ein rentabler Betrieb eines erfindungsgemäßen Systems bereits bei vergleichsweise niedrigen Temperaturen, die deutlich unter 100 °C liegen können, möglich ist. Dies ist ein deutlicher Vorteil gegenüber wasserbasierten Arbeitsfluiden, die nur bei hohen Temperaturen effizient funktionieren.

In Ausführungsformen umfasst das erfindungsgemäße System an dem Übergang von der Injektionsleitung in das Wärmereservoir ein Ventil, vorzugsweise ein Drosselventil oder Regulierventil. Mit Hilfe eines solchen Ventils kann der Durchfluss des Energietauschermedium in das Wärmereservoir reguliert werden. Ein Ventil am Übergangspunkt der Injektionsleitung in das Wärmereservoir ermöglicht die Steuerung des Zuflusses von Energietauschermedium in das Wärmereservoir. Hierdurch kann ein effizienter Ablauf des erfindungsgemäßen Verfahrens sichergestellt werden. Zudem wird durch ein Ventil ermöglicht, dass das Verfahren nicht kontinuierlich, sondern periodisch abläuft. Hierunter wird verstanden, dass das Energietauschermedium nicht kontinuierlich in das Wärmereservoir einfließt. Stattdessen wechseln sich Phasen, in denen Energietauschermedium in das Wärmereservoir eintritt, mit solchen Phasen ab, in denen das im Wärmereservoir vorhandene Energietauschermedium erwärmt wird und einen Phasenübergang durchmacht, ohne dass gleichzeitig Energietauschermedium in das Wärmereservoir eintritt. Ein entsprechendes System kann als "Atmendes System" bezeichnet werden. Es ist es möglich, dass der Zugang von Energietauschermedium zum Wärmereservoir an die im Wärmereservoir herrschenden Bedingungen bezüglich Druck und Temperatur angepasst wird.

Durch das Regulierventil kann der Strom des Energietauschermediums so einreguliert werden, dass nur so viel thermische Energie aus dem Wärmereservoir entnommen wird, wie durch das Salzgestein nachgeliefert wird. Dadurch kann eine konstante Temperatur im Wärmereservoir erreicht werden. Bei einem zeitweise hohen Energiebedarf kann das Drosselventil so einreguliert (geöffnet) werden, dass der Einstrom des Energietauschermediums in das Wärmereservoir stärker ist und mehr Energie austrägt als im Wärmereservoir nachgeliefert wird. Dabei kommt es zur zunehmenden Abkühlung des Wärmereservoirs. Anschließend kann das Drosselventil komplett geschlossen werden, so dass keine Energie mehr abtransportiert wird und sich das Wärmereservoir wieder erwärmen kann. Bei einem "atmenden System" kann also für kurze Zeit viel Energie entnommen werden - danach muss aber abgeschaltet oder mit einem niedrigen Arbeitsmediumstrom gearbeitet werden, damit sich das Wärmereservoir wieder aufheizen kann.

Im Rahmen des erfindungsgemäßen Systems kann die Injektionsleitung jeweils an einem tieferen Punkt mit dem Kühlungsreservoir und dem Wärmereservoir verbunden sein als die Steigleitung. Es ist vorteilhaft für den effizienten Ablauf des Verfahrens, wenn die Injektionsleitung an einem tief gelegenen Punkt des Kühlungsreservoirs aus diesem Austritt, so dass das dort enthaltene flüssige Energietauschermedium mit Hilfe von Gravitation in Richtung des Wärmereservoirs abfließen kann. Im Wärmereservoir ist es zudem vorteilhaft, wenn das ankommende flüssige Energietauschermedium im unteren Bereich des Wärmereservoirs eintritt. In der Folge kann es Energie aufnehmen und es kommt zum Phasenübergang des eingetretenen flüssigen Energietauschermediums, das entweder gasförmig oder überkritisch wird und so aufgrund der geringeren Dichte im Wärmereservoir nach oben steigt. Daher ist es von Vorteil, wenn die Steigleitung, über die das Energietauschermedium nach dem Phasenübergang aus dem Wärmereservoir abgeführt wird, im oberen Bereich oder an einem hoch gelegenen Punkt des Wärmereservoirs liegt, so dass der Austritt hier ohne zusätzliche Hilfsmittel allein durch das Aufsteigen des gasförmigen oder überkritischen Energietauschermediums erfolgen kann. Beim Eintritt in das Kühlungsreservoir ist es wiederum von Vorteil, wenn das gasförmige oder flüssige Energietauschermedium im oberen Bereich eintritt, bevor es seine Wärmeenergie an die kältere Umgebung abgibt und sich verflüssigt. So wird vermieden, dass das eintretende warme Energietauschermedium durch das bereits im Kühlungsreservoir vorhandene flüssige Energietauschermedium hindurch treten muss.

In Ausführungsformen der Erfindung umfasst die Vorrichtung zur Energieumwandlung eine Turbine, wie beispielsweise eine *Zwei-Phasen-Turbine.* Die Nutzung einer Zweiphasenturbine ist insbesondere dann von Vorteil, wenn das in der Steigleitung aufsteigende Energietauschermedium sowohl gasförmig als auch überkritisch sein kann, da solche Turbinen mit Fluiden unterschiedlicher Aggregatszustände gleichzeitig arbeiten können.

Erfindungsgemäß kann die Vorrichtung zur Energieumwandlung, beispielsweise eine Turbine, im oberen Bereich der Steigleitung, bevorzugt kurz vor dem Kühlungsreservoir angeordnet sein. Dies ist von Vorteil, da beim Durchgang durch die Vorrichtung zur Energieumwandlung bzw. die Turbine dem Energietauschermedium Energie entzogen wird, weshalb es günstig ist, wenn das Medium im Anschluss direkt aus der Steigleitung in das Kühlungsreservoir austreten kann, so dass keine Störung des Fluidstroms innerhalb der Steigleitung entsteht.

Es ist vorteilhaft, wenn die Injektionsleitung und/oder die Steigleitung in dem erfindungsgemäßen System wärmeisoliert sind. Hierdurch ist sichergestellt, dass das Energietauschermedium nach dem Austritt aus dem Kühlungsreservoir und vor dem Eintritt in das Wärmereservoir keine relevanten Mengen an Wärmeenergie aus der Umgebung aufnimmt, so dass innerhalb der Injektionsleitung kein Phasenübergang stattfinden kann. Im Fall der Steigleitung ist es von Vorteil, wenn diese Wärme isoliert ist, da hierdurch ebenfalls sichergestellt wird, dass das aufsteigende erwärmte gasförmige oder überkritische Energietauschermedium keine großen Energiemengen an die Umgebung abgibt, bevor es durch die Vorrichtung zur Energieumwandlung hindurch tritt. Entsprechend wird durch eine wärmeisolierte Steigleitung der Effizienzgrad des Systems erhöht.

Zudem kann die Steigleitung eine gegenüber der Injektionsleitung erhöhte Querschnittsfläche aufweisen. Durch die Nutzung einer Steigleitung, die im Vergleich zur Injektionsleitung einen erhöhten Querschnitt aufweist, wird sichergestellt, dass das Energietauschermedium nach dem Phasenübergang im Wärmereservoir in ausreichenden Mengen und schnell genug aus dem Wärmereservoir abgeführt werden kann. Nach dem Phasenübergang kommt es zu einer Verringerung der Dichte des Energietauschermediums, das mit einer Volumenvergrößerung einhergeht. Entsprechend kann es vorteilhaft sein, wenn diese großen Volumina durch eine voluminöse Leitung abgeführt werden können.

Um die gleiche Masse des Mediums nach Phasenübergang mit geringerer Dichte in der Steigleitung zu transportieren, wie in flüssiger Form mit höherer Dichte in der Injektionsleitung transportiert wird, ist bevorzugt ein größerer Rohrdurchmesser der Steigleitung zu wählen, da hierdurch mehr Platz für das voluminösere aufsteigende Medium geschaffen wird. Dabei sollten die beiden Rohrquerschnittsflächen im gleichen Verhältnis stehen wie die Dichten der beiden transportierten Medien.

In Ausführungsformen des Systems kann der Druck im Kühlungsreservoir reguliert werden, beispielsweise durch Pumpen oder die Turbine. In Ausführungsformen sollte sich CO₂ als Energietauschermedium am Ausgang der Turbine nicht unter 60 bar entspannen. Es ist vorteilhaft, dass eine Druckregulation innerhalb des Systems möglich ist, insbesondere im Kühlungsreservoir, in dem vergleichsweise niedrige Temperaturen herrschen, im Fall von CO₂ als Energietauschermedium bevorzugt unterhalb von 31 °C. Mithilfe von Pumpen oder einem Pumpsystem kann eine gezielte Druckerhöhung herbeigeführt werden, wodurch auch bei vergleichsweise niedrigen Temperaturen der flüssige Aggregatszustand des Energietauschermediums sichergestellt werden kann.

In Ausführungsformen der Erfindung liegt der Druck im Kühlungsreservoir unterhalt des Drucks am kritischen Punkt des Energietauschermedium, beispielsweise unterhalb von 73,75 bar für CO₂ als Energietauschermedium.

In Ausführungsformen der Erfindung ist der Druck in der mit Energietauschermedium gefüllten Injektionsleitung und im Wärmereservoir aufgrund der gegenüber dem Kühlungsreservoir tieferen Lage erhöht. Dadurch, dass in Ausführungsformen das flüssige Energietauschermedium aus dem Kühlungsreservoir über einen tief-liegenden Anschlusspunkt der Injektionsleitung aus dem Kühlungsreservoir in die Injektionsleitung und über diese in das Wärmereservoir fließen kann, baut sich innerhalb der flüssigkeitsgefüllten Injektionsleitung ein hydrostatischer Druck auf, der zu einer Druckerhöhung gegenüber dem Kühlungsreservoir führt. Der hydrostatische Druck, auch Gravitationsdruck oder Schweredruck, ist der Druck, der sich innerhalb eines ruhenden Fluids, also einer Flüssigkeit oder eines Gases, durch den Einfluss der Gravitation einstellt. Der Begriff wird entgegen der Wortbedeutung "Wasser" auch für andere Flüssigkeiten und sogar für Gase verwendet und trifft entsprechend auch auf das flüssige Energieaustauschmedium im Rahmen des vorliegenden Systems zu.

In Ausführungsformen ist der Druck am unteren Ende der Injektionsleitung und im Wärmereservoir oberhalb des Drucks am kritischen Punkt des Energietauschermedium, beispielsweise oberhalb von 73,75 bar für CO₂ als Energietauschermedium. Im Ausführungsformen der Erfindung, die CO₂ als Energietauschermedium verwenden, kommt es innerhalb des Wärmereservoirs zu einem Phasenübergang in den gasförmigen oder überkritischen Bereich. Durch die Einstellung des Systems in einer Art und Weise, dass im Wärmereservoir ein Druck oberhalb von 73,75 bar herrscht, ist sichergestellt, dass es bei einer Temperaturerhöhung über 31 °C zu einem Phasenübergang in den überkritischen Bereich kommt.

Zudem liegt in Ausführungsformen der Erfindung die Temperatur im Kühlungsreservoir unterhalb der Temperatur am kritischen Punkt des Energietauschermedium, so dass das Energietauschermedium im Kühlungsreservoirflüssig ist, und die Temperatur im Wärmereservoir oberhalb der Temperatur am kritischen Punkt des Energietauschermediums, so dass das Energietauschermedium im Wärmereservoir gasförmig oder überkritisch vorliegt.

Beispielsweise kann die Temperatur im Kühlungsreservoir im Falle von CO₂ als Energietauschermedium unterhalb von 31°C liegen, und die Temperatur im Wärmereservoir kann oberhalb von 31°C liegen.

Es kann von Vorteil sein, wenn die Temperatur im Kühlungsreservoir unterhalb der Temperatur am kritischen Punkt liegt, da hierdurch sichergestellt ist, dass unabhängig von dem dort herrschenden Druck das Energietauschermedium im flüssigen Zustand vorliegt, solange die Temperaturen nicht so niedrig sind, dass es zu einer Verfestigung des Energietauschermediums kommt.

Weiterhin betrifft die vorliegende Erfindung ein Verfahren zur Gewinnung geothermischer Energie nach Anspruch 11.

Die Extraktion der Energie aus dem erwärmten Energietauschermedium kann mit Hilfe von geeigneten Vorrichtung zur Energieumwandlung erfolgen, die einem Fachmann im Bereich der Geothermie und des Kraftwerksbaus bekannt sind. Beispielsweise kann hierzu eine Turbine genutzt werden, aber auch andere gebräuchliche Vorrichtungen zur Energieextraktion.

Gemäß einer Ausführungsform des erfindungsgemäßen Verfahrens erfolgt die Zuführung des flüssigen Energietauschermediums in das Wärmereservoir aufgrund der gegenüber dem Kühlungsreservoir tieferen Lage durch Gravitation. Bevorzugt erfolgt die Zuführung des Energietauschermedium ohne die Zuführung externer Energie.

In Ausführungsformen des Verfahrens erfolgt die Rückführung des erwärmten Energietauschermediums in das Kühlungsreservoir advektiv, bevorzugt ohne externe Energiezufuhr. Aufgrund des Phasenübergangs des Energietauschermediums in den gasförmigen oder überkritischen Zustand erfolgt der Aufstieg in Ausführungsformen der Erfindung ohne Zuführung externer Energie aufgrund der geringeren Dichte des Mediums nach dem Phasenübergang.

Gemäß einer Ausführungsform des erfindungsgemäßen Verfahrens erfolgt der Übergang des Energietauschermediums in seinen gasförmigen oder überkritischen Aggregatzustand durch Erwärmung im Wärmereservoir.

In Ausführungsformen des Verfahrens erfolgt der Übergang des gasförmigen oder überkritischen Energietauschermediums in seinen flüssigen Aggregatszustand durch Abkühlung und optional Druckverlust im Kühlungsreservoir.

Die höhere Temperatur im Wärmereservoir wird im Rahmen des erfindungsgemäßen Verfahrens bevorzugt durch die geothermische Umgebungswärme erzeugt. Zudem können die vergleichsweise niedrigen Temperaturen des Kühlungsreservoirs im Rahmen des Verfahrens durch die umgebende Gesteinstemperatur erzeugt werden.

In Ausführungsformen wird der höhere Druck im Wärmereservoir aufgrund der tieferen Lage gegenüber dem Kühlungsreservoir durch den hydrostatischen Druck des Energietauschermediums erzeugt.

Alle spezifischen zusätzlichen Merkmale des erfindungsgemäßen Verfahrens können auch im Rahmen des erfindungsgemäßen Systems umgesetzt werden und sind hiermit sowohl für das Verfahren als auch das System der Erfindung offenbart. Gleiches gilt andersherum auch für Merkmale, die in der Patentbeschreibung im Kontext des erfindungsgemäßen Systems offenbart wurden.

### Spezielle Beschreibung der Erfindung

Die vorliegende Erfindung betrifft ein System zur Gewinnung geothermischer Energie, umfassend ein druckdichtes Kühlungsreservoir und einen tiefer gelegenen druckdichten Gesteinshohlraum als Wärmereservoir. In Ausführungsformen kann die Vorrichtung zur Energieumwandlung oberirdisch angeordnet sein.

Als "geothermische Energie" wird im Rahmen der Erfindung die durch die Erdwärme freigesetzte Energie verstanden. Erdwärme ist die in der Erde gespeicherte thermische Energie, welche entzogen und genutzt werden kann, und zählt zu den regenerativen Energien. Sie kann sowohl direkt genutzt werden, etwa zum Heizen und Kühlen im Wärmemarkt (Wärmepumpenheizung), als auch zur Erzeugung von elektrischem Strom oder in einer Kraft-Wärme-Kopplung. "Geothermie" bezeichnet sowohl die geowissenschaftliche Untersuchung der thermischen Situation als auch die ingenieurtechnische Nutzung der Erdwärme. Im Sinne der Erfindung sind somit Verfahren bzw. Systeme zur Gewinnung von geothermischer Energie solche Verfahren bzw. Systeme, die die von der Erde freigesetzte Wärmeenergie in nutzbare Energie umwandeln, zum Beispiel elektrischen Strom.

Im Rahmen der Erfindung wird ein druckdichtes Kühlungsreservoir sowie ein druckdichtes Wärmereservoir, das ein Gesteinshohlraum ist, genutzt. Der Begriff "druckdicht" wird im Kontext der vorliegenden Erfindung so verstanden, dass das System als solches und insbesondere die verwendeten Kühlungs- und Wärmereservoirs mit Druck beaufschlagt werden können, ohne dass große Mengen des eingeführten Energietauschermediums aus dem System und den Reservoiren entweichen. Entsprechend sind in Ausführungsformen der Erfindung nicht nur die Reservoirs, sondern auch die Injektions- und die Steigleitung druckdicht. Eine komplette Druckdichtigkeit wird häufig nicht erreicht werden können. Druckdicht bedeutet aber, dass nach Befüllung des Systems und Erzeugung eines gewissen erhöhten Drucks, beispielsweise im Kühlungsreservoir, dieser erhöhte Druck über einen relevanten längeren Zeitraum, beispielsweise mehrere Stunden, bevorzugt mehrere Tage oder Wochen, soweit konstant bzw. erhöht bleibt, dass das System bzw. Verfahren ohne Nachjustierung des Drucks über diesen Zeitraum betrieben werden kann. Hingegen lässt sich ein nicht-druckdichtes/offenes System nicht mit einem erhöhten Druck eines Energietauschermediums beaufschlagen, da in solchen Systemen keine abgeschlossenen Reservoire vorhanden sind, so dass bei der Befüllung mit zusätzlichen Mengen von Energietauschermedium das bereits vorhandene Medium beispielsweise in benachbarte Bereiche der Reservoire ausweichen kann, so dass es nicht zu einer Druckerhöhung über die Umgebungsbedingungen hinaus kommt.

Das Wärmereservoir und das Kühlungsreservoir sind im Rahmen der Erfindung jeweils ein druckdichter natürlicher oder künstlicher Salzgesteinshohlraum.

Als direkte Interaktion zwischen Gestein und Energietauschermedium wird hier verstanden, dass die Reservoir-Hohlräume nicht von einer künstlichen Ummantelung umschlossen sind, sondern direkt von dem umgebenden Gestein begrenzt werden, so dass ein direkter Kontakt (direkte Interaktion) zwischen dem Energietauschermedium und dem Gestein zustande kommt. Hierbei ist es bevorzugt, dass sich der Begriff "Interaktion" auf den Kontakt der beiden Substanzen Gestein und Energietauschermedium bezieht, und nicht auf eine chemische Interaktion, die zu einer Veränderung der Materialien führt, die nicht auf geänderte Druck- oder Temperaturverhältnisse zurückzuführen ist.

Die Hohlräume in Salzgestein, wie insbesondere Salzstollen, sind als Reservoire bei Nutzung von CO₂ als Hauptbestandteil des Energietauschermediums besonders vorteilhaft. Nach aktuellem Kenntnisstand kommt es zu nahezu keinen chemischen oder physikalischen Reaktionen zwischen CO₂ und Salzgestein, so dass eine Veränderung des angrenzenden Gesteins durch die Hindurchleitung des Energietauschermediums CO₂ nicht zu erwarten ist. Zudem sind Salzgesteine gasdicht und können somit mit erhöhten Drücken des Energietauschermediums beaufschlagt werden. Zudem hat Salzgestein eine hohe Wärmeleitfähigkeit (ca. 5 W/m*K) und ist aus den oben genannten Gründen somit besonders gut geeignet als Umgebungsgestein von Wärmereservoiren und Kühlungsreservoiren im Rahmen der vorliegenden Erfindung.

Salzgesteine sind Evaporit- oder Sedimentgesteine, welche in der geologischen Vergangenheit auf natürlichem Weg meist durch Ausfällung aus konzentriertem Meerwasser entstanden und fossil überliefert ist. Salzgesteine können insbesondere Halit, Anhydrit, Gips und Sylvin umfassen. Bis auf geringe Beimengungen anderer Evaporitminerale, wie Anhydrit, Gips oder Sylvin, sowie Tonmineralen besteht Steinsalz ausschließlich aus dem Mineral Halit (Natriumchlorid, NaCl). Das Wort "Steinsalz" wird in mineralogischer Literatur auch als Synonym für "Halit" verwendet. Steinsalz ist der Rohstoff für geschätzt 70 Prozent des weltweit produzierten Speisesalzes. Ein Salzstock ist die bekannteste Form einer geologischen Salzstruktur, deren Hohlräume im Rahmen der Erfindung genutzt werden können. Salzstrukturen umfassen insbesondere geologische Gebilde, die aus deformierten Salzgesteinen bestehen, wie Salzstöcke und Salzkissen. Salzstrukturen treten ausschließlich in der oberen Erdkruste auf (in Tiefen von bis 15 km) und können bis an die Erdoberfläche reichen.

Als Wärmereservoir wird im Rahmen der vorliegenden Erfindung ein unterirdischer Salzgesteinshohlraum genutzt. Es ist bevorzugt, dass dieser Gesteinshohlraum nicht ausgekleidet ist, so dass ein direkter Kontakt zwischen dem Energietauschermedium und den Gesteinswänden des Wärmereservoirs stattfindet. Entsprechend ist es wichtig, dass das Wärmereservoir, genau wie das Kühlungsreservoir, druckdicht abgeschlossen ist, so dass keine relevanten Mengen des Energietauschermediums aus dem System entweichen können, auch bei erhöhten Drücken, die aufgrund von Temperatur und Druckerhöhungen im Wärmereservoir und damit verbundene Phasenübergänge des Energietauschermediums entstehen können.

Die tiefere Lage des Wärmereservoirs gegenüber dem Kühlungsreservoir ist ein entscheidender Vorteil der vorliegenden Erfindung. Somit ist es möglich, dass das im Kühlungsreservoir flüssig vorliegende Energietauschermedium über die Injektionsleitung mit Hilfe der Gravitationskraft abfließen kann in Richtung des tiefer gelegenen Wärmereservoirs. Die tiefere Lage bezieht sich auf die Entfernung des Reservoirs zur Erdoberfläche und bezeichnet eine größere Entfernung des tiefer gelegenen Wärmereservoirs im Vergleich zum Kühlungsreservoir. Alternativ kann die tiefere Lage als eine größere Nähe des Wärmereservoirs im Vergleich zum Kühlungsreservoir zum Gravizentrum der Erde angesehen werden.

In Ausführungsformen des erfindungsgemäßen Systems kann die Oberfläche, Porosität und/oder Permeabilität des Gesteinshohlraums oder der Gesteinshohlräume eingestellt werden, beispielsweise durch das Einbringen von Abraumgestein, vorzugsweise Abraumsalzgestein.

Als Oberfläche eines Gesteinshohlraums, der das Wärmereservoir und das Kühlungsreservoirs bildet, wird die Gesteinsfläche bezeichnet, die mit dem Energietauschermedium interagiert. Je größer diese Oberfläche ist, desto effizienter bzw. schneller erfolgt die Wärmeübertragung zwischen dem Medium und dem Gestein.

Die Porosität ist eine dimensionslose Messgröße und stellt das Verhältnis von Hohlraumvolumen zu Gesamtvolumen eines Stoffes oder Stoffgemisches dar. Eine erhöhte Porosität geht mit einer erhöhten Oberfläche des Gesteins einher, und ist somit vorteilhaft für einen effizienten Wärmeaustausch zwischen Energietauschermedium und Gestein. Hierbei ist festzustellen, dass die Poren nur nutzbar sind, wenn eine entsprechende Permeabilität gegeben ist. Nur ein offenes Porennetzwerk, also hohe Permeabilität, erhöht die effektive nutzbare Gesteinsoberfläche. Abgeschlossene Porenräume hingegen, welche nicht vom Medium erreichbar sind, haben keinen positiven Effekt. Somit müssen quasi beide Größen betrachtet werden. Im Fall dieser Erfindung ist die Nutzung von Abraum o. ä. zur Erhöhung der effektiven Kontaktoberfläche sinnvoll. Diese Abraumschüttungen, aufgefahren in z.B. alternierenden Rippen innerhalb des Wärme- oder Kühlungsreservoirs ist gekennzeichnet durch eine hohe Permeabilität und Porosität. Die somit erzeugte höhere Kontaktfläche zum Energietauschermedium, zusammen mit der Anbindung zu den Wänden/Boden des Reservoirhohlraums, verbessert den Wärmeaustausch erheblich.

Auch wenn die Reservoire also in einem niedrigporösen und gering permeablen, also druckdichten Gestein liegen, ist mit dieser Maßnahme eine Möglichkeit zur Erhöhung des Wärmeübertrags gegeben.

Als Abraumgestein im Rahmen der Erfindung wird jegliche Art von Gestein verstanden, die innerhalb der Reservoire zur Einstellung einer geeigneten Oberfläche und/oder geeigneter Wärmeaustauscheigenschaften genutzt werden können. Dieses Abraumgestein kann von extern in die Reservoire eingebracht werden, um so die Gesteinsoberfläche innerhalb der Reservoire zu vergrößern. Alternativ könnte entsprechendes Gestein von den Gesteinswänden der Reservoire abgeschlagen oder auf andere Art abgelöst werden, wodurch sich die Oberfläche der Reservoire ebenfalls erhöhen würde. Als Abraumgestein kann auch von extern ein anderes Gestein eingebracht werden, als das, das die Gesteinshöhle, die als Reservoire dient, natürlicherweise begrenzt. Hierbei ist aufgrund der hohen Verfügbarkeit, Formbarkeit und Wärmeleitfähigkeit Abraumsalz oder Abraumsalzgestein geeignet.

Der Begriff "Injektionsleitung" bezeichnet im Rahmen der vorliegenden Erfindung jegliche Art von druckdichter Verbindung zwischen dem Kühlungsreservoir und dem Wärmereservoir, über die das flüssige Energietauschermedium, das im Kühlungsreservoir vorhanden ist, dem Wärmereservoir zugeführt werden kann. Hierbei kann es sich um eine druckdichte Bohrung in den zwischen den Reservoiren liegenden Gesteinsschichten handeln, ohne dass hierfür eine Auskleidung der Bohrung notwendig sein muss. Bevorzugt ist die Injektionsleitung mit einer wärmeisolierten Ummantelung ausgekleidet, so dass es nicht zu einer Temperaturveränderung des Energietauschermediums während des Zuflusses zum Wärmereservoir kommt.

In Ausführungsformen ist die Injektionsleitung eine Rohrverbindung oder Rohrleitungsverbindung zwischen dem Kühlungsreservoir und dem Wärmereservoir, die bevorzugt wärmeisoliert ist. Die Injektionsleitung sollte zudem druckdicht ausgestaltet sein, damit es nicht zu einem Entweichen des Energietauschermediums beim Transfer vom Kühlungsreservoir in das Wärmereservoir kommen kann. Zudem ist es vorteilhaft, wenn es aufgrund des Höhenunterschiedes zwischen dem Kühlungsreservoir und dem Wärmereservoir und des daraus resultierenden hydrostatischen Druckes des Energietauschermediums innerhalb der Flüssigkeitssäule in der Injektionsleitung zu einer Druckerhöhung mit zunehmender Tiefe bzw. am unteren Ende der Injektionsleitung kommt. Weiterhin sollte die Injektionsleitung bevorzugt so ausgestaltet sein, dass das Energietauschermedium aufgrund von Gravitation ohne Zufuhr externer Energie vom Kühlungsreservoir in das Wärmereservoir abfließen kann.

Ähnlich wie die Injektionsleitung ist als "Steigleitung" im Kontext der vorliegenden Erfindung eine Verbindung zwischen dem Wärmereservoir und dem Kühlungsreservoir zu verstehen, durch die eine Fluidverbindung hergestellt werden kann, und durch die das erwärmte Energietauschermedium, nach dem im Wärmereservoir erfolgten Phasenübergang in den gasförmigen oder überkritischen Zustand des Energietauschermediums, aufsteigen kann. Auch für die Steigleitung ist es bevorzugt, wenn eine Wärmeisolation vorliegt, damit das aufsteigende Energietauschermedium vor Erreichen der Vorrichtung zur Energieumwandlung möglichst wenig aufgenommene Wärmeenergie an die Umgebung abgibt. Entsprechend ist eine wärmeisolierte Rohrverbindung als Steigleitung geeignet im Rahmen der vorliegenden Erfindung.

Erfindungsgemäß umfasst die Steigleitung zudem eine Vorrichtung zur Energieumwandlung. Im Sinne der Erfindung wird hierunter verstanden, dass im Bereich der Steigleitung eine Vorrichtung zur Energieumwandlung angeordnet ist, so dass das gasförmig oder überkritisch aus dem Wärmereservoir durch die Steigleitung aufsteigende Energietauschermedium durch die Vorrichtung zur Energieumwandlung hindurch geleitet wird, wobei dem Energietauschermedium Energie entzogen und nutzbar gemacht wird. Es ist bevorzugt, dass die Vorrichtung zur Energieumwandlung im oberen Bereich der Steigleitung, also kurz vor dem Eintritt der Steigleitung in das Kühlungsreservoir, angeordnet ist. Zudem kann die Steigleitung wärmeisoliert sein, so dass das aufsteigende gasförmige oder überkritische Energietauschermedium vor der Passage der Vorrichtung zur Energieumwandlung nicht relevant abkühlt oder in sonstiger Weise Energie abgibt, die zuvor im Wärmereservoir aufgenommen wurde.

Eine Vorrichtung zur Energieumwandlung kann insbesondere eine Turbine umfassen, wobei die Vorrichtung nicht darauf limitiert ist. In Ausführungsformen umfasst die Vorrichtung zur Energieumwandlung eine oder mehrere Kolben-Zylinder-Vorrichtungen. Weiterhin kann die Vorrichtung zur Energieumwandlung ein oder mehrere Spiral-, Schrauben- oder Rotationskompressoren, die so ausgelegt sind, dass sie als Motoren rückwärtslaufen, umfassen. In einer Ausführungsform umfasst die Steigleitung mehr als eine die Vorrichtung zur Energieumwandlung, beispielsweise mehrere Turbinen, wobei diese parallel laufen können und mehrere Pumpen oder Kompressoren direkt und andere elektrisch, beispielsweise über einen Generator, betrieben werden.

Eine Turbine ("Kreiselmaschine") ist eine Fluidenergiemaschine, die die kinetische Energie von Fluiden (Flüssigkeiten und Gase, vorliegend auch insbesondere überkritisches CO₂ oder überkritische Energietauschermedium) in Dreh- oder Rotationsenergie umwandelt. Eine Turbine wandelt das Abfallen der inneren Energie eines strömenden Fluides (bspw. Flüssigkeit oder Gas) in mechanische Leistung um, nämlich Drehmoment mal Drehzahl, die sie über ihre Welle abgibt. Turbinen sind zu den Strömungsmaschinen zu zählen und ihre mechanisch nutzbare Leistung kann bis zu 1,5 Gigawatt (2 Millionen PS) oder mehr betragen. Dem Fluidstrom wird durch die möglichst wirbelfreie laminare Umströmung der Turbinenschaufeln ein Teil seiner inneren Energie (bestehend aus Bewegungs-, Lage- und Druckenergie) entzogen, der auf die Laufschaufeln der Turbine übergeht. Die auf der Turbinenwelle montierten Laufschaufeln werden dadurch in Drehung versetzt, die nutzbare Leistung wird an eine angekoppelte Arbeitsmaschine, wie beispielsweise an einen Generator, abgegeben. Ein konstantes Drehmoment der Arbeitsmaschine sorgt für eine gleichmäßige Drehzahl der Turbine, ansonsten muss die Drehzahl über einen Regler konstant gehalten werden. Eine Turbine ist ein integraler Bestandteil von Geothermiekraftwerken, beispielsweise als Dampfturbinen oder als ORC-Turbinen bei niedrigeren Temperaturen. Turbinen können auch mehrstufig sein und die Einspeisung von Arbeitsmitteln unterschiedlicher Temperaturen (*flash steam*) zulassen. Auf diese Art kann die zur Verfügung stehende Temperaturspreizung besser genutzt und die Gesamtleistung der Anlage gesteigert werden.

Im Rahmen der Erfindung kann eine Zwei-Phasen-Turbine genutzt werden, die geeignet ist zum Umwandeln von Energie bei einem Zwei-Phasen-Fluidstrom (Flüssigkeit und Gas) in mechanische Energie, wie sie beispielsweise durch eine Drehturbinenwelle geliefert wird, wobei die Flüssigkeit und das Gas zwei separate chemische Komponenten oder die Dampfphase und die Flüssigkeitsphase einer einzelnen chemischen Komponente sein können.

Im Kontext der vorliegenden Erfindung können verschiedene Energietauschermedien genutzt werden. Bevorzugte Energietauschermedien sind ausgewählt aus der Gruppe umfassend CO₂, Ammoniak, FCKW, sowie Gemische aus diesen Stoffen. Zudem können Energietauschermedien mit zusätzlichen Additiven versetzt sein, wie beispielsweise Helium, Argon oder Krypton.

CO₂ oder Kohlenstoffdioxid oder Kohlendioxid ist eine chemische Verbindung aus Kohlenstoff und Sauerstoff mit der Summenformel CO₂, und ist unter atmosphärischen Bedingungen ein unbrennbares, saures und farbloses Gas. Kohlenstoffdioxid liegt bei Normaldruck unter -78,5 °C als Feststoff, Trockeneis genannt, vor. Wird dieses erhitzt, schmilzt es nicht, sondern sublimiert, geht also direkt in den gasförmigen Aggregatzustand über. Es hat daher bei diesen Bedingungen keinen Schmelz- und keinen Siedepunkt.

Der Tripelpunkt, an dem die drei Phasen fest, flüssig und gasförmig im thermodynamischen Gleichgewicht stehen, liegt bei einer Temperatur von -56,6 °C und einem Druck von 5,19 bar. Die kritische Temperatur beträgt 31,0 °C, der kritische Druck 73,8 bar und die kritische Dichte 0,468 g/cm³. Unterhalb der kritischen Temperatur kann Kohlenstoffdioxid durch Drucksteigerung zu einer farblosen Flüssigkeit verdichtet werden. Bei Raumtemperatur ist dazu ein Druck von circa 60 bar erforderlich.

In bevorzugten Ausführungsformen des Systems umfasst das Energietauschermedium CO₂. In anderen Ausführungsformen der Erfindung besteht das Energietauschermedium vornehmlich aus CO₂, so dass CO₂ die Hauptkomponente des Energietauschermedium ist.

Überkritisches Kohlenstoffdioxid (auch superkritisches Kohlenstoffdioxid oder scCO₂, von englisch *supercritical*) ist Kohlenstoffdioxid in einem fluiden Zustand über seiner kritischen Temperatur und seinem kritischen Druck. Die Eigenschaften von Kohlenstoffdioxid im überkritischen Aggregatzustand liegen zwischen denen von Gas und Flüssigkeit. Sie unterscheiden sich damit deutlich von den Eigenschaften unter Normbedingungen. Überkritisches Kohlenstoffdioxid ist genauso dicht wie eine Flüssigkeit, hat aber dieselbe Viskosität wie ein Gas. Überkritisches CO2 entsteht, wenn Druck und Temperatur über dem kritischen Punkt P_{c} für Kohlenstoffdioxid liegen, also bei einer Temperatur von mehr als 304,13 K (30,980 °C) und bei einem Druck von über 7,375 MPa (73,75 bar). Das kritische molare Volumen beträgt 94 cm³·mol⁻¹.

In der Thermodynamik ist der kritische Punkt ein thermodynamischer Zustand eines Stoffes, der sich durch Angleichen der Dichten von flüssiger und gasförmiger Phase kennzeichnet. Die Unterschiede zwischen beiden Aggregatzuständen hören an diesem Punkt auf zu existieren. Im Phasendiagramm stellt der Punkt das obere Ende der Dampfdruckkurve dar.

Der kritische Punkt P_{c} ist durch drei Zustandsgrößen ausgezeichnet: die kritische Temperatur T_{c}, den kritischen Druck p_{c}, und die kritische Dichte ρ_{c} bzw. das kritische Molvolumen V_{m,c}. Insbesondere in Mehrkomponentensystemen werden Gase in Systemen oberhalb von deren kritischer Temperatur, aber in Anwesenheit nicht-kritischer Stoffe, als nicht-kondensierbare Komponenten bezeichnet. Diese können z. B. bei der thermodynamischen Beschreibung der Absorption von Bedeutung sein.

Da oberhalb des kritischen Punktes Flüssigkeit und Gas nicht mehr voneinander unterschieden werden können, spricht man stattdessen von einem überkritischen Fluid, das sich in einem überkritischen Zustand befindet. Eine weitere, aus dem englischen Sprachraum stammende Bezeichnung ist superkritisch. Bei Annäherung an den kritischen Punkt nähern sich die Dichte des gasförmigen und des flüssigen Zustands einander an, die Verdampfungswärme sinkt bei der Annäherung an den kritischen Punkt und verschwindet bei seinem Erreichen ganz.

Auf molekularer Ebene lässt sich das Verhalten oberhalb des kritischen Punkts anschaulich beschreiben: Wird ein Gas einem immer höheren Druck ausgesetzt, so verringern sich die Abstände zwischen den Gasmolekülen kontinuierlich. Bei Erreichen des kritischen Drucks werden die Abstände dann genau so groß wie zwischen den Molekülen in der flüssigen Phase; es ist kein Unterschied mehr feststellbar.

Eine besondere technische Bedeutung hat die kritische Temperatur. Dies ist die Temperatur, unterhalb derer ein Gas durch Druck verflüssigt werden kann, während dies oberhalb der kritischen Temperatur nicht mehr möglich ist. Die Isotherme der kritischen Temperatur teilt damit das H-s-Diagramm (Enthalpie-Entropie-Diagramm oder Mollier-Diagramm, bei dem die Entropie auf der x-Achse und die zugehörige Enthalpie auf der y-Achse aufgetragen) eines Stoffes in einen Bereich, bei dem Druckverflüssigung möglich ist, und in einen Bereich, in dem Druckverflüssigung nicht mehr möglich ist.

Als Fluid (von lateinisch fluidus 'fließend') werden Substanzen bezeichnet, die sich unter dem Einfluss von Scherkräften kontinuierlich verformen, das heißt, sie fließen. Ihr Schubmodul ist null. In der Physik werden unter dem Begriff Fluid Gase und Flüssigkeiten zusammengefasst, was auch den überkritischen Zustand von Substanzen mit einschließt. Viele physikalische Gesetze gelten für Gase und Flüssigkeiten gleichermaßen, denn diese Stoffe unterscheiden sich in manchen Eigenschaften quantitativ (in der Größenordnung des Effekts), statt qualitativ. Die Strömungslehre bezeichnet jede Substanz als Fluid, die einer genügend langsamen Scherung keinen Widerstand entgegensetzt (endliche Viskosität). In diesem Sinne umfasst der Begriff außer Materie im flüssigen und gasförmigen Aggregatzustand auch Plasma, Suspensionen und Aerosole.

Der Tripelpunkt (auch Dreiphasenpunkt) ist ein Zustand eines aus einer einzigen Stoffkomponente bestehenden Systems, in dem Temperatur und Druck dreier Phasen im thermodynamischen Gleichgewicht stehen. Handelt es sich um die drei verschiedenen Aggregatzustände, ist der Tripelpunkt im Phasendiagramm der Schnittpunkt der beiden Phasengrenzlinien Sättigungsdampfdruck und Schmelzkurve: Auf der Sättigungsdampfdruckkurve stehen die flüssige und die dampfförmige Phase im Gleichgewicht, auf der Schmelzkurve die flüssige und die feste Phase, am Schnittpunkt beider Kurven alle drei.

Ammoniak ist eine chemische Verbindung von Stickstoff und Wasserstoff mit der Summenformel NH₃. Es ist ein wasserlösliches Gas. Bei Raumtemperatur ist Ammoniak ein farbloses, diamagnetisches, stechend riechendes Gas. Unterhalb von -33 °C wird es flüssig. Die Flüssigkeit ist farblos und stark lichtbrechend und hat am Siedepunkt eine Dichte von 0,6819 kg/l. Auch durch Druckerhöhung lässt sich das Gas leicht verflüssigen; bei 20 °C ist schon ein Druck von 900 kPa ausreichend. Die kritische Temperatur ist 132,4 °C, der kritische Druck beträgt 113 bar, die kritische Dichte ist 0,236 g/cm³. Innerhalb des Bereichs von 15,4 bis 33,6 Vol-% (108-336 g/m³) ist Ammoniak explosionsgefährlich. Seine Zündtemperatur liegt bei 630 °C.

In der flüssigen Phase bildet Ammoniak Wasserstoffbrückenbindungen aus, was den verhältnismäßig hohen Siedepunkt und eine hohe Verdampfungsenthalpie von 23,35 kJ/mol begründet. Um diese Bindungen beim Verdampfen aufzubrechen, wird viel Energie gebraucht, die aus der Umgebung zugeführt werden muss. Deshalb eignet sich flüssiges Ammoniak zur Kühlung. Vor der Verwendung der Halogenkohlenwasserstoffe war Ammoniak ein häufig benutztes Kältemittel in Kühlschränken. Unterhalb von -77,7 °C erstarrt Ammoniak in Form von farblosen Kristallen. Es kristallisiert dabei im kubischen Kristallsystem mit einem Gitterparameter a = 508,4 pm (-196 °C). Bei -102 °C beträgt der Gitterparameter a = 513,8 pm. Die Struktur lässt sich von einem kubisch-flächenzentrierten Gitter ableiten, wobei sechs der zwölf Nachbarmoleküle näher zum Zentralmolekül gelegen sind, als die übrigen sechs. Jedes freie Elektronenpaar ist dabei mit jeweils drei Wasserstoffatomen koordiniert.

**Tabelle 1. Kritische Daten für Kohlendioxid und Ammoniak.**

| **Stoff** | | **Temperatur** | | **Druck** | **Dichte** |
|---|---|---|---|---|---|
| **Name** | **Summenformel** | **K** | **°C** | **bar** | **kg/m³** |
| Kohlendioxid | CO₂ | 304,13 | 30,98 | 73,77 | 468 |
| Ammoniak | NH₃ | 405,40 | 132,25 | 113,59 | 225 |

Fluorchlorkohlenwasserstoffe (FCKW, chemische Nomenklatur nach IUPAC: Chlorfluorkohlenwasserstoffe, CFKW, oder auch Freone) sind eine umfangreiche chemische Gruppe niedermolekularer organischer Verbindungen, die als Treibgase, Kältemittel oder Lösemittel verwendet werden. FCKW sind Kohlenwasserstoffe, bei denen Wasserstoffatome durch die Halogene Chlor und Fluor ersetzt wurden, sie sind eine Untergruppe der Halogenkohlenwasserstoffe. FCKW, die nur Einfachbindungen enthalten, nennt man gesättigte FCKW. Ist in der Verbindung kein Wasserstoff mehr enthalten, so nennt man sie Chlorfluorkohlenstoffe. Mit H-FCKW werden "teilhalogenierte" Fluorchlorkohlenwasserstoffe bezeichnet, ihre Wasserstoffatome sind nur teilweise durch Chlor- und Fluoratome ersetzt: Sie besitzen ein weitaus geringeres Ozonabbaupotenzial als die FCKW, ihr "Treibhauspotenzial" liegt ebenfalls weit unter dem der FCKW. FCKW sind sehr beständig, unbrennbar, geruchlos, durchsichtig (farblos) und sind oft ungiftig oder haben nur eine geringe Toxizität. Die FCKW der Methan- und Ethanreihe besitzen einen niedrigen Siedepunkt und lassen sich durch Komprimieren leicht verflüssigen. Da sie während des Verdampfens große Wärmemengen absorbieren können sind sie vor allem als Kühlmittel von Bedeutung (s. u.).

**Tabelle 2. Wichtige FCKW-Kältemittel.**

| **Bezeichnung** | **Trivialname** | **Summenformel** | **Siedepunkt** |
|---|---|---|---|
| Trichlorfluormethan | Frigen 11 | CCl₃F | 24,9 °C |
| Dichlordifluormethan | Frigen 12 | CCl₂F₂ | -30 °C |
| Dichlorfluormethan | Frigen 21 | CHCl₂F | 8,9 °C |
| Chlordifluormethan | Frigen 22 | CHClF₂ | -40,7 °C |
| 1,1,2-Trichlor-1,2,2-trifluorethan | Frigen 113 | CClF₂-CCl₂F | 48 °C |
| 1,2-Dichlor-1,1,2,2-tetrafluorethan | Frigen 114 oder Cryofluoran | CClF₂-CClF₂ | 3,5 °C |

Begriffe die vorliegend nicht näher erläutert werden sind nach dem allgemeinen Verständnis und im Lichte des Fachwissens des durchschnittlichen Fachmanns im Bereich der Geothermie und des Kraftwerksbaus zu verstehen und auszulegen.

### Figuren und Beispiele

Die Erfindung wird durch die folgenden Figuren und Beispiele näher beschrieben. Diese sollen den Umfang der Erfindung nicht einschränken, sondern stellen bevorzugte Ausführungsformen von Aspekten der Erfindung dar, die eine bessere Veranschaulichung der hier beschriebenen Erfindung ermöglichen.

### Figuren:

**Figur 1****:** Geothermische Nutzung von Salzminen mit Hilfe von CO₂, als Energietauschermedium mit Untertageturbine und Kondensationsreservoir.
**Figur 2****:** Nicht erfindungsgemäße geothermische Nutzung von Salzminen mit Hilfe von CO₂, als Energietauschermedium mit Übertageturbine.
**Figur 3****:** Geothermische Nutzung von Salzminen mit Hilfe von CO₂, als Energietauschermedium mit Untertageturbine und gesolten Hohlräumen als Wärme- und Kondensationsreservoir.

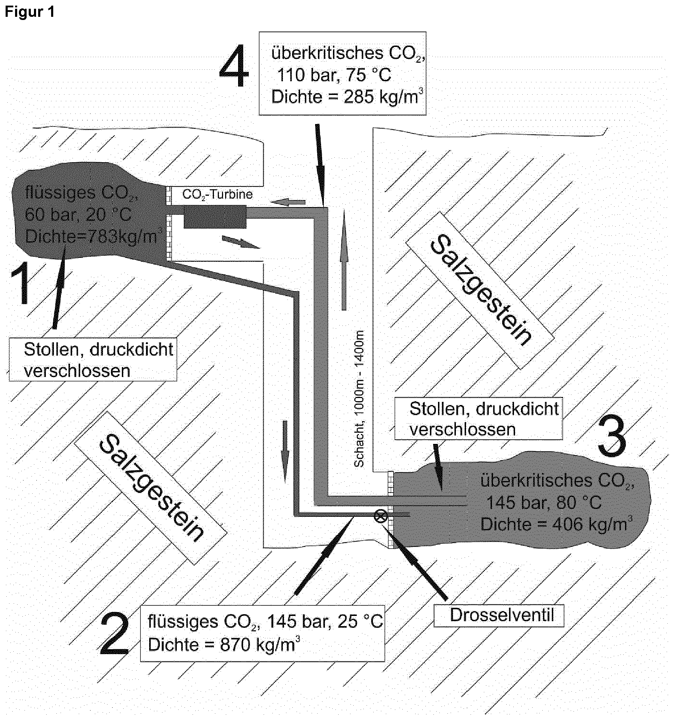

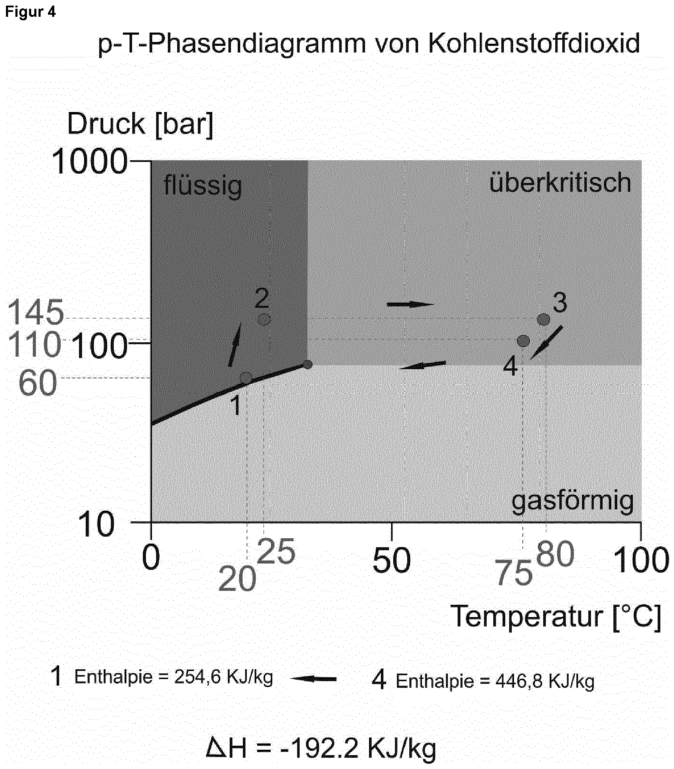

**Figur 4****:** p-T-Phasendiagramm von Kohlenstoffdioxid mit eingezeichnetem CO₂-Arbeitsfluid-Kreislauf (Punkte 1-4). Der im p-T-Phasendiagramm eingezeichnetem CO₂-Arbeitsfluid-Kreislauf (Punkte 1-4) entspricht den im Folgenden dargestellten Beispielen 1-3. Die Punkte 1-4 sind ebenfalls in den Figuren 1-3 dargestellt. An Punkt 4 (vor der CO₂-Turbine) besitzt das CO₂ eine Enthalpie von 446,8 KJ/kg, an Punkt 1 (hinter der Gasturbine) 254,6 KJ/kg. Das heißt, mit der Turbine können theoretisch bei 100%iger Effizienz 192 kJ/kg CO₂ gewonnen werden. Um 1 kWh elektrische Energie zu erzeugen ist ein Durchfluss von 19 kg CO₂ nötig. Diese CO₂-Masse entspricht im flüssigen Zustand im Kondensationsreservoir einem Volumen von ca. 24 Liter, im überkritischen Zustand im Wärmereservoir ca. 47 Liter.

### Beispiele

Die Erfindung beinhaltete eine neue Methode um geothermische Energie aus ausgedienten Salzminen zu gewinnen. Dabei soll Kohlenstoffdioxid in untertägigen Hohlräumen in Salzstöcken oder flach lagernden Salzflözen zirkuliert werden, um eine Turbine anzutreiben, die elektrischen Strom erzeugt. Man nutzt dabei die Phasenübergänge und Dichteunterschiede von Kohlenstoffdioxid bei verschiedenen Temperaturen aus, um die Zirkulation ohne Pumpen rein advektiv zu erzeugen.

Da es nach gegenwärtigem Kenntnisstand zu nahezu keinen chemischen oder physikalischen Reaktionen mit dem Salzgestein kommt, eignet sich Kohlenstoffdioxid für die Extraktion von geothermischer Energie aus Salz. Die physiko-chemischen Eigenschaften von Kohlenstoffdioxid als Wärmetransportmedium erlauben den Einsatz in Wärmereservoiren niedriger bis moderater Temperatur, in denen traditionelle wasserbasierte Arbeitsfluide nicht rentabel eingesetzt werden können. Die Methode benötigt keine, möglicherweise sozio-politisch heikle, Untergrundstimulation zur Erhöhung der Permeabilität, sondern nutzt existierende Hohlräume. Anders als Porenspeicher, die einen "Caprock" als Sperrschicht benötigen um das vertikale Aufsteigen von Kohlenstoffdioxid zu verhindern, sind Hohlräume im Salz nach allen Seiten gasdicht und können mit Druck beaufschlagt werden, der höher ist als der natürliche hydrostatische Druck. Hinzu kommt die hohe Wärmeleitfähigkeit des Salzgesteins. Mit Werten von 5 W/m*K liegt es weit über den Werten für Sand- oder Tonsteine.

### Beispiel 1, wie in Figur 1 dargestellt:

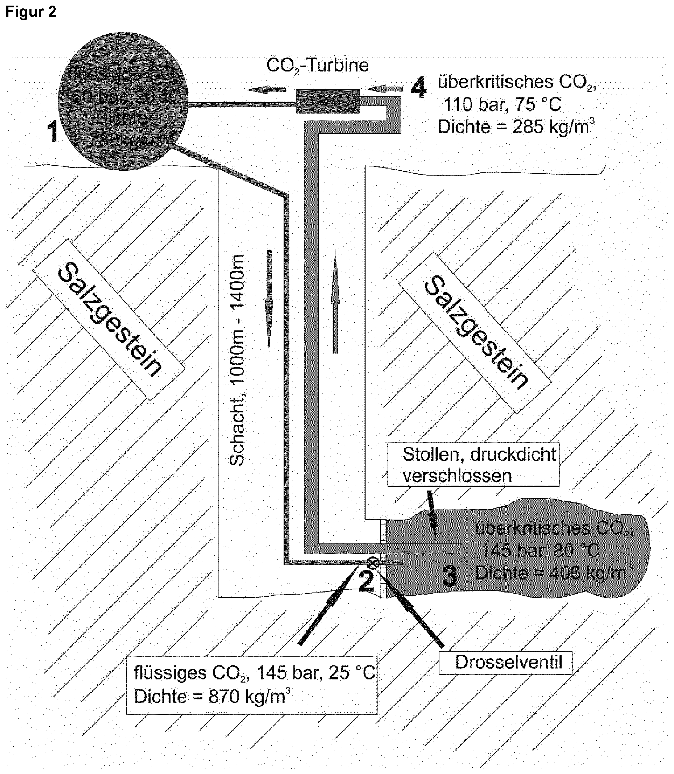

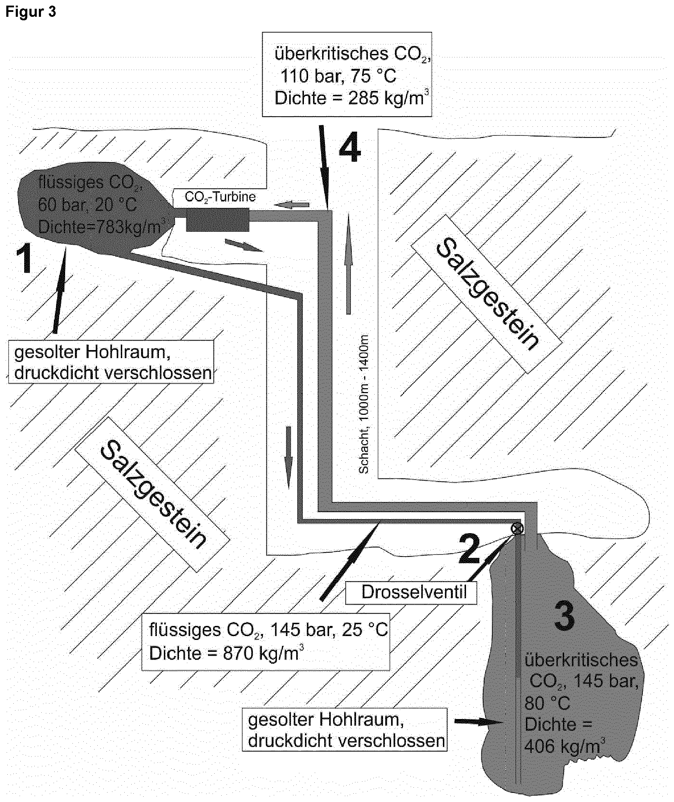

Flüssiges Kohlenstoffdioxid (ca. 20°C - 25°C, 60 bar, Dicht von 783 kg/m³) **(1)** wird über eine wärmeisolierte Injektionsleitung in 1000-1400 m Tiefe geleitet (Figur 1). Durch das Eigengewicht der vertikalen, ca. 1000 m langen CO₂-Säule beträgt der Druck beim Austreten aus dem Injektionsstrang am unteren Ende 145 bar bei 870 kg/m³ spezifischen CO₂-Gewichts **(2)**. Über ein Drosselventil wird das Kohlenstoffdioxid in einen druckdicht verschlossenen Salzhohlraum (Stollensystem) entspannt. Im Stollen wird Wärme von den Begrenzungsflächen des Hohlraums auf das Kohlenstoffdioxid übertragen. Die nun herrschenden Bedingungen (145 bar, 80°C) **(3)** bewirken einen Phasenübergang: das flüssige Kohlenstoffdioxid wird überkritisch und verringert seine Dichte auf 406 kg/m³. Durch die geringe Dichte und den hohen Druck des Kohlenstoffdioxids, erfolgt der Aufstieg durch die Steigleitung bis zur CO₂-Turbine. Hier hat das CO₂ bei 110 bar und 75 °C eine Dichte von 285 kg/m³ **(4)** (die entsprechenden Punkte 1-4 sind auch für die folgenden Beispiele 2 und 3 in den Figuren 2 und 3 dargestellt).

Die Wärmeübertragung im Reservoir kann durch technische Maßnahmen, z.B. das Einbringen von Abraumsalzgestein geeigneter Korngrößenverteilung und variable Verdichtungszustände optimiert werden. Auf diese Weise kann die technisch gewünschte Porosität und Permeabilität des Wärmereservoirs eingestellt und an die geologischen und thermodynamischen Randbedingungen angepasst werden. Nach dem Durchströmen des Wärmereservoirs wird das überkritische Kohlenstoffdioxid durch eine, im Vergleich zum Injektionsstrang größer dimensionierte und wärmeisolierte Steigleitung abgeführt. Durch die relativ geringe Dichte und den hohen Druck des Kohlenstoffdioxids, erfolgt der Aufstieg rein advektiv, ohne zusätzliche Pumpenleistung. Das überkritische Kohlenstoffdioxid wird in ein höher gelegenes Niveau des Salzstockes geleitet, das sich durch möglichst niedrige Temperaturen auszeichnet. Hier wird das überkritische CO₂ genutzt, um eine Turbine, beispielsweise eine Zweiphasenturbine anzutreiben und z.B. elektrische Energie zu erzeugen. Diese Turbinen können mit relativ niedrig temperierten Arbeitsfluiden effizient betrieben werden und die Druckdifferenz zwischen CO₂-Produktionsstrang und CO₂-Injektionsstrang nutzen um elektrische Energie zu erzeugen. Die Druckdifferenz wird durch das Entspannen des Kohlenstoffdioxids in einen kühleren, ebenfalls druckdicht verschlossenen Salzhohlraum (Kondensationsreservoir oder Kühlungsreservoir) erreicht. Dieser Stollen kann durch technische Maßnahmen, äquivalent dem tieferliegenden Wärmereservoir auf gewünschte Porosität und Permeabilität eingestellt werden. Das Kohlenstoffdioxid kühlt (i) durch den Joule Thomson Effekt und (ii) durch Austausch mit der Oberfläche des Salzhohlraums ab. Die Wärme wird aufgrund der hohen Wärmeleitfähigkeit des Salzgesteins schnell ins Nebengestein abgeführt. Der Druck im Kondensationsreservoir wird so eingestellt, dass Kohlenstoffdioxid als flüssige Phase vorliegt, ohne dass es zusätzlich komprimiert werden muss. Das verflüssigte Kohlenstoffdioxid wird mittels der Injektionsleitung wieder in das Wärmereservoir zurückgeleitet, so dass ein kompletter Kreislauf entsteht. Durch die hohe Dichte von flüssigem Kohlenstoffdioxid ist dazu keine zusätzliche Pumpleistung nötig, da das Kohlenstoffdioxid rein gravitativ zurückfließt.

### Beispiel 2, wie in Figur 2 dargestellt, und weitere Alternativen:

Nicht erfindungsgemäß kann das Kühlungsreservoir und die Zweiphasenturbine oberirdisch installiert werden und das Kohlenstoffdioxid kann dort beispielsweise mit Luft oder Wasser gekühlt werden.

### Beispiel 3, wie in Figur 3 dargestellt

Es können auch Kavernenhohlräume im Salz gesolt werden, die in unterschiedlichen Teufen bei verschieden Temperaturniveaus angelegt werden. Die Erstellung definierter Hohlräume auf Pilotskala ist zu Testzwecken insbesondere hinsichtlich einer Effizienzoptimierung sinnvoll.

## Patentansprüche

1. System zur Gewinnung geothermischer Energie, umfassend
a. ein druckdichtes Kühlungsreservoir und einen tiefer gelegenen druckdichten Gesteinshohlraum als Wärmereservoir,
wobei im Wärmereservoir gegenüber dem Kühlungsreservoir eine erhöhte Temperatur und optional ein erhöhter Druck vorliegt,
wobei das Wärmereservoir ein druckdichter natürlicher oder künstlicher Salzgesteinshohlraum sind,
b. eine Injektionsleitung, über die ein im Kühlungsreservoir vorliegendes flüssiges Energietauschermedium dem Wärmereservoir zugeführt werden kann,
c. eine Steigleitung, über die das in seinen gasförmigen oder überkritischen Aggregatzustand übergegangene Energietauschermedium aus dem Wärmereservoir in das Kühlungsreservoir zurückgeführt werden kann,
wobei die Steigleitung eine Vorrichtung zur Energieumwandlung umfasst,
**dadurch gekennzeichnet, dass**
das Kühlungsreservoir ein druckdichter natürlicher oder künstlicher Salzgesteinshohlraum ist.

2. System nach Anspruch 1, wobei das Wärmereservoir und das Kühlungsreservoir jeweils ein druckdichter stillgelegter Salzstollen sind.

3. System nach einem der vorherigen Ansprüche, wobei das Gestein direkt mit dem Energietauschermedium interagiert.

4. System nach einem der vorherigen Ansprüche, wobei die Oberfläche, Porosität und/oder Permeabilität des Gesteinshohlraums oder der Gesteinshohlräume eingestellt werden kann, beispielsweise durch das Einbringen von Abraumgestein, vorzugsweise Abraumsalzgestein.

5. System nach einem der vorherigen Ansprüche, wobei die Vorrichtung zur Energieumwandlung oberirdisch angeordnet ist.

6. System nach einem der vorherigen Ansprüche, wobei das Energietauschermedium CO₂ umfasst.

7. System nach einem der vorherigen Ansprüche, wobei die Injektionsleitung jeweils an einem tieferen Punkt mit dem Kühlungsreservoir und dem Wärmereservoir verbunden ist als die Steigleitung.

8. System nach einem der vorherigen Ansprüche, wobei die Vorrichtung zur Energieumwandlung eine Turbine ist und im oberen Bereich der Steigleitung, bevorzugt kurz vor dem Kühlungsreservoir angeordnet ist.

9. System nach einem der vorherigen Ansprüche, wobei der Druck im Kühlungsreservoir reguliert werden kann, beispielsweise durch Pumpen.

10. System nach einem der vorherigen Ansprüche, wobei der Druck in der mit Energietauschermedium gefüllten Injektionsleitung und im Wärmereservoir aufgrund der gegenüber dem Kühlungsreservoir tieferen Lage erhöht ist.

11. Verfahren zur Gewinnung geothermischer Energie, umfassend
a. Zuführung eines flüssigen Energietauschermediums aus einem Kühlungsreservoir in einen tiefer gelegenen Gesteinshohlraum als Wärmereservoir, wobei in dem Wärmereservoir eine höhere Temperatur und optional ein höherer Druck vorliegt, wobei das Wärmereservoir ein druckdichter natürlicher oder künstlicher Salzgesteinshohlraum ist,
b. Übergang des Energietauschermediums in seinen gasförmigen oder überkritischen Aggregatzustand im Wärmereservoir,
c. Rückführung des gasförmigen oder überkritischen Energietauschermediums aus dem Wärmereservoir in das Kühlungsreservoir,
wobei aus dem erwärmten Energietauschermedium Energie extrahiert wird und das gasförmige oder überkritische Energietauschermedium im Kühlungsreservoir in seinen flüssigen Aggregatszustand übergeht,
**dadurch gekennzeichnet, dass**
das Kühlungsreservoir ein druckdichter natürlicher oder künstlicher Salzgesteinshohlraum ist.

12. Verfahren nach dem vorherigen Anspruch, wobei die Zuführung des flüssigen Energietauschermediums in das Wärmereservoir aufgrund der gegenüber dem Kühlungsreservoir tieferen Lage durch Gravitation erfolgt.

13. Verfahren nach einem der Ansprüche 11-12, wobei die Rückführung des erwärmten Energietauschermediums in das Kühlungsreservoir *advektiv* ohne externe Energiezufuhr erfolgt.

14. Verfahren nach einem der Ansprüche 11-13, wobei der Übergang des Energietauschermediums in seinen gasförmigen oder überkritischen Aggregatzustand durch Erwärmung und optional Druckerhöhung im Wärmereservoir erfolgt, und der Übergang des gasförmigen oder überkritischen Energietauschermediums in seinen flüssigen Aggregatszustand durch Abkühlung und optional Druckverlust im Kühlungsreservoir erfolgt.

15. Verfahren nach einem der Ansprüche 11-14, wobei die höhere Temperatur im Wärmereservoir durch die geothermische Umgebungswärme erzeugt wird, und/oder der höhere Druck im Wärmereservoir aufgrund der tieferen Lage gegenüber dem Kühlungsreservoir durch den hydrostatischen Druck des Energietauschermediums erzeugt wird.

## Claims

1. A system for producing geothermal energy comprising
a. a pressure-tight cooling reservoir and a lower situated pressure-tight rock cavity serving as a heat reservoir,
wherein an increased temperature and optionally an increased pressure is present in the heat reservoir compared with the cooling reservoir,
wherein the heat reservoir is a pressure-tight natural or artificial salt rock cavity,
b. an injection line through which a liquid energy exchange medium present in the cooling reservoir can be fed to the heat reservoir,
c. a riser line through which the energy exchange medium, which has changed to its gaseous or supercritical aggregate state, can be returned from the heat reservoir to the cooling reservoir,
wherein the riser line comprises a device for energy conversion, **characterized in that** the cooling reservoir is a pressure-tight natural or artificial salt rock cavity.

2. The system according to claim 1, wherein the heat reservoir and the cooling reservoir is a pressure-tight disused salt gallery, respectively.

3. System according to any one of the preceding claims, where the rock interacts directly with the energy exchange medium.

4. System according to any one of the preceding claims, whereby the surface area, porosity and/or permeability of the rock cavity or cavities can be adjusted, for example by the introduction of overburden rock, preferably overburden salt rock.

5. System according to any one of the preceding claims, wherein the device for energy conversion is arranged above ground.

6. System according to any one of the preceding claims, wherein the energy exchange medium comprises CO₂.

7. System according to any one of the preceding claims, wherein the injection line is connected to the cooling reservoir and the heat reservoir at a lower point than the riser line.

8. System according to any one of the preceding claims, wherein the device for energy conversion is a turbine and is located in the upper part of the riser, preferably just before the cooling reservoir.

9. System according to any one of the preceding claims, wherein the pressure in the cooling reservoir can be regulated, for example by means of pumps.

10. System according to any one of the preceding claims, whereby the pressure in the injection line filled with energy exchange medium and in the heat reservoir is increased due to the lower position compared to the cooling reservoir.

11. A method for producing geothermal energy comprising
a. Feeding a liquid energy exchange medium from a cooling reservoir into a lower situated rock cavity serving as a heat reservoir, wherein a higher temperature and optionally a higher pressure is present in the heat reservoir,
wherein the heat reservoir is a pressure-tight natural or artificial salt rock cavity,
b. Transition of the energy exchange medium to its gaseous or supercritical aggregate state in the heat reservoir,
c. Return of the gaseous or supercritical energy exchange medium from the heat reservoir to the cooling reservoir,
wherein energy is extracted from the heated energy exchange medium and the gaseous or supercritical energy exchange medium in the cooling reservoir changes to its liquid aggregate state, **characterized in that** the cooling reservoir is a pressure-tight natural or artificial salt rock cavity.

12. A method according to the preceding claim, wherein the liquid energy exchange medium is fed into the heat reservoir by gravity due to the lower position compared to the cooling reservoir.

13. Method according to any one of claims 11-12, wherein the return of the heated energy exchange medium into the cooling reservoir is effected advectively without external energy supply.

14. Method according to any one of claims 11-13, wherein the transition of the energy exchange medium into its gaseous or supercritical aggregate state takes place by heating and optionally increasing pressure in the heat reservoir, and the transition of the gaseous or supercritical energy exchange medium into its liquid aggregate state takes place by cooling and optionally pressure loss in the cooling reservoir.

15. Method according to any one of claims 11-14, wherein the higher temperature in the heat reservoir is generated by the geothermal ambient heat, and/or the higher pressure in the heat reservoir due to the lower position in relation to the cooling reservoir is generated by the hydrostatic pressure of the energy exchange medium.

## Revendications

1. Système de production d'énergie géothermique, comprenant
a. un réservoir de refroidissement étanche à la pression et une cavité rocheuse étanche à la pression plus profonde comme réservoir de chaleur,
dans lequel une température accrue et éventuellement une pression accrue par rapport au réservoir de refroidissement sont présentes dans le réservoir de chaleur,
dans lequel le réservoir de chaleur est une cavité de roche saline naturelle ou artificielle étanche à la pression,
b. une conduite d'injection par laquelle un fluide liquide d'échange d'énergie présent dans le réservoir de refroidissement peut être acheminé dans le réservoir de chaleur,
c. une conduite montante par laquelle le fluide d'échange d'énergie changé en son état d'agrégat gazeux ou supercritique peut être renvoyé du réservoir de chaleur au réservoir de refroidissement,
dans lequel la conduite montante comprend un dispositif de conversion d'énergie,
**caractérisé en ce que**
le réservoir de refroidissement est une cavité rocheuse saline naturelle ou artificielle étanche à la pression.

2. Système selon la revendication 1, dans lequel le réservoir de chaleur et le réservoir de refroidissement sont respectivement une mine de sel désaffectée étanche à la pression.

3. Système selon l'une des revendications précédentes, dans lequel la roche interagit directement avec le fluide d'échange d'énergie.

4. Système selon l'une des revendications précédentes, dans lequel la surface, la porosité et/ou la perméabilité de la cavité rocheuse ou des cavités rocheuses peuvent être ajustées, par exemple en introduisant de la roche morts-terrain, de préférence de la roche morts-terrain saline.

5. Système selon l'une des revendications précédentes, dans lequel le dispositif de conversion d'énergie est disposé à la surface.

6. Système selon l'une des revendications précédentes, dans lequel le fluide d'échange d'énergie comprend du CO₂.

7. Système selon l'une des revendications précédentes, dans lequel la conduite d'injection est reliée respectivement au réservoir de refroidissement et au réservoir de chaleur en un point plus profond que la conduite montante.

8. Système selon l'une des revendications précédentes, dans lequel le dispositif de conversion d'énergie est une turbine et est disposé dans la partie supérieure de la conduite montante, de préférence juste avant le réservoir de refroidissement.

9. Système selon l'une des revendications précédentes, dans lequel la pression dans le réservoir de refroidissement peut être régulée, par exemple par pompage.

10. Système selon l'une des revendications précédentes, dans lequel la pression dans la conduite d'injection remplie de fluide d'échange d'énergie et dans le réservoir de chaleur est augmentée du fait de la position plus profonde par rapport au réservoir de refroidissement.

11. Procédé de production d'énergie géothermique, comprenant
a. l'acheminement d'un fluide d'échange d'énergie liquide à partir d'un réservoir de refroidissement dans une cavité rocheuse plus profonde comme réservoir de chaleur, dans lequel une température plus élevée et éventuellement une pression plus élevée sont présentes dans le réservoir de chaleur,
dans lequel le réservoir de chaleur est une cavité rocheuse saline naturelle ou artificielle étanche à la pression,
b. le changement du fluide d'échange d'énergie à son état d'agrégat gazeux ou supercritique dans le réservoir de chaleur,
c. le renvoi du fluide d'échange d'énergie gazeux ou supercritique du réservoir de chaleur vers le réservoir de refroidissement,
dans lequel l'énergie est extraite du fluide d'échange d'énergie chauffé et le fluide d'échange d'énergie gazeux ou supercritique change en son état d'agrégat liquide dans le réservoir de refroidissement,
**caractérisé en ce que**
le réservoir de refroidissement est une cavité rocheuse saline naturelle ou artificielle étanche à la pression.

12. Procédé selon la revendication précédente, dans lequel l'acheminement du fluide liquide d'échange d'énergie s'effectue dans le réservoir de chaleur du fait de la position plus profonde par rapport au réservoir de refroidissement par gravitation.

13. Procédé selon l'une des revendications 11 à 12, dans lequel le retour du fluide d'échange d'énergie chauffé s'effectue *par advection* dans le réservoir de refroidissement sans apport d'énergie externe.

14. Procédé selon l'une des revendications 11 à 13, dans lequel la passage du fluide d'échange d'énergie dans son état d'agrégat gazeux ou supercritique s'effectue par chauffage et éventuellement par augmentation de la pression dans le réservoir de chaleur, et le changement du fluide d'échange d'énergie gazeux ou supercritique dans son état d'agrégat liquide s'effectue par refroidissement et éventuellement par la perte de pression dans le réservoir de refroidissement.

15. Procédé selon l'une des revendications 11 à 14, dans lequel la température plus élevée dans le réservoir de chaleur est générée par la chaleur ambiante géothermique, et/ou la pression plus élevée dans le réservoir de chaleur en raison de la position plus profonde par rapport au réservoir de refroidissement est générée par la pression hydrostatique du fluide d'échange d'énergie.
